# EUROPEAN PATENT APPLICATION

(11) **EP 3 742 808 A1**
(43) Date of publication of application: **25.11.2020**
(21) Application number: 18904470.4
(22) Date of filing: 31.01.2018
(51) Int. Cl.: H04W 36/18

(54) **DATA TRANSMISSION METHOD, SWITCHING METHOD, AND RELATED DEVICE**

(71) Applicant: GUANGDONG OPPO MOBILE TELECOMMUNICATIONS CORP., LTD., Wusha, Chang'an Dongguan, Guangdong 523860 (CN)
(72) Inventor: LIU, Jianhua, Dongguan, Guangdong 523860 (CN)
(74) Representative: Manitz Finsterwald Patent- und Rechtsanwaltspartnerschaft mbB
(86) International application number: PCT/CN2018/074830
(87) International publication number: WO 2019/148396

(57) **Abstract**

The embodiments of the present application provide a data transmission method, switching method, and related device. In the present application, configuration information of a TDM mode is negotiated by a first network device and a second network device; the configuration information of said TDM mode is used by said user equipment; the TDM mode is used by the user equipment for maintaining a connection between the first network device and the second network device; after receiving a switching instruction from the first network device, the user equipment performs data transmission with the first network device or the second network device. By using the embodiments of the present application, it is possible to shorten the duration of data interruption.

## Description

### TECHNICAL FIELD

The disclosure relates to the technical field of communications, and in particular to a method for data transmission, a method for handover and related devices.

### BACKGROUND

When a network signal is changed, a user equipment (UE) would perform handover, for example, from a long term evolution (LTE) network to a wideband code division multiple access (WCDMA) network, from a WCDMA network to a global system for mobile communication (GSM) network, from a GSM network to a WCDMA network, or from a WCDMA network to an LTE network, or the like. In another case, when a UE is moved from one cell to another cell, the UE would also perform handover, for example, from a currently accessed cell to another cell.

In the related art, a handover procedure includes 3 processes: a handover preparation process, a handover execution process and a handover completion process. During the handover execution process, a UE side is disconnected from a network side, causing data interruption between the UE side and the network side.

### SUMMARY

Provided are a method for data transmission, a method for handover and related devices, for shortening duration of data interruption.

According to a first aspect, provided is a method for data transmission, including: receiving, by a user equipment (UE), a handover instruction from a first network device, wherein the handover instruction carries configuration information of a time division multiplexing (TDM) pattern negotiated between the first network device and a second network device, and the configuration information of the TDM pattern is used for the UE to use the TDM pattern; and performing, by the UE, data transmission with the first network device or the second network device in the TDM pattern.

According to a second aspect, provided is a method for handover, including: receiving, by a second network device, a handover request from a first network device, wherein the handover request carries a radio transceiving capability of a user equipment (UE); determining, by the second network device, according to the radio transceiving capability, configuration information of a time division multiplexing (TDM) pattern; and sending, by the second network device, a handover acknowledgement response to the handover request to the first network device, wherein the handover acknowledgement response carries the configuration information of the TDM pattern, the handover acknowledgement response is used for the first network device to send the configuration information of the TDM pattern to the UE, the configuration information of the TDM pattern is used for the UE to use the TDM pattern, and the TDM pattern is used for the UE to keep connection with the first network device and the second network device.

According to a third aspect, provided is a method for handover, including: sending, by a first network device, a handover request to a second network device, wherein the handover request carries a radio transceiving capability of a user equipment (UE); receiving, by the first network device, a handover acknowledgement response from the second network device, wherein the handover acknowledgement response carries configuration information of a time division multiplexing (TDM) pattern determined by the second network device according to the radio transceiving capability; and sending, by the first network device, a handover instruction to the UE, wherein the handover instruction carries the configuration information of the TDM pattern, the configuration information of the TDM pattern is used for the UE to use the TDM pattern, and the TDM pattern is used for the UE to keep connection with the first network device and the second network device.

According to a fourth aspect, provided is a user equipment (UE), including a communication unit and a processing unit, wherein the processing unit is configured to receive, through the communication unit, a handover instruction from a first network device, wherein the handover instruction carries configuration information of a time division multiplexing (TDM) pattern negotiated between the first network device and a second network device, and the configuration information of the TDM pattern is used for the UE to use the TDM pattern; and the processing unit is further configured to perform data transmission with the first network device or the second network device in the TDM pattern.

According to a fifth aspect, provided is a network device, applied to a communication system including a first network device, a second network device and a user equipment (UE), wherein the network device is the second network device and includes a communication unit and a processing unit, and wherein the processing unit is configured to receive, through the communication unit, a handover request from the first network device, wherein the handover request carries a radio transceiving capability of the UE; the processing unit is further configured to determine, according to the radio transceiving capability, configuration information of a time division multiplexing (TDM) pattern; and the processing unit is further configured to send, through the communication unit, a handover acknowledgement response to the handover request to the first network device, wherein the handover acknowledgement response carries the configuration information of the TDM pattern, the handover acknowledgement response is used for the first network device to send the configuration information of the TDM pattern to the UE, the configuration information of the TDM pattern is used for the UE to use the TDM pattern, and the TDM pattern is used for the UE to keep connection with the first network device and the second network device.

According to a sixth aspect, provided is a network device, applied to a communication system including a first network device, a second network device and a user equipment (UE), wherein the network device is the first network device and includes a communication unit and a processing unit, and wherein the processing unit is configured to send, through the communication unit, a handover request to the second network device, wherein the handover request carries a radio transceiving capability of the UE; the processing unit is further configured to receive, through the communication unit, a handover acknowledgement response from the second network device, wherein the handover acknowledgement response carries configuration information of a time division multiplexing (TDM) pattern determined by the second network device according to the radio transceiving capability; and the processing unit is further configured to send, through the communication unit, a handover instruction to the UE, wherein the handover instruction carries the configuration information of the TDM pattern, the configuration information of the TDM pattern is used for the UE to use the TDM pattern, and the TDM pattern is used for the UE to keep connection with the first network device and the second network device.

According to a seventh aspect, provided is a user equipment (UE), including one or more processors, one or more memories, one or more transceivers, and one or more programs, wherein the one or more programs are stored in the one or more memories and are configured to be executed by the one or more processors, and the one or more programs include instructions for performing actions of the method according to the first aspect.

According to an eighth aspect, provided is a user equipment (UE), including one or more processors, one or more memories, one or more transceivers, and one or more programs, wherein the one or more programs are stored in the one or more memories and are configured to be executed by the one or more processors, and the one or more programs include instructions for performing actions of the method according to the second aspect.

According to a ninth aspect, provided is user equipment (UE), including one or more processors, one or more memories, one or more transceivers, and one or more programs, wherein the one or more programs are stored in the one or more memories and are configured to be executed by the one or more processors, and the one or more programs include instructions for performing actions of the method according to the third aspect.

According to a tenth aspect, provided is a computer-readable storage medium for storing a computer program for electronic data exchange, wherein the computer program enables a computer to perform some or all actions of the method according to the first aspect.

According to an eleventh aspect, provided is a computer-readable storage medium for storing a computer program for electronic data exchange, wherein the computer program enables a computer to perform some or all actions of the method according to the second aspect.

According to a twelfth aspect, provided is a computer-readable storage medium for storing a computer program for electronic data exchange, wherein the computer program enables a computer to perform some or all actions of the method according to the third aspect.

According to a thirteenth aspect, provided is a computer program product, including a non-transitory computer-readable storage medium stored with a computer program, wherein the computer program is operable to enable a computer to perform some or all actions of the method according to the first aspect. The computer program product may be a software package.

According to a fourteenth aspect, provided is a computer program product, including a non-transitory computer-readable storage medium stored with a computer program, wherein the computer program is operable to enable a computer to perform some or all actions of the method according to the second aspect. The computer program product may be a software package.

According to a fifteenth aspect, provided is a computer program product, including a non-transitory computer-readable storage medium stored with a computer program, wherein the computer program is operable to enable a computer to perform some or all actions of the method according to the third aspect. The computer program product may be a software package.

In the disclosure, a first network device and a second network device negotiate configuration information of a TDM pattern to be configured for a UE. The configuration information of the TDM pattern is used for the UE to use the TDM pattern, and the TDM pattern is used for the UE to keep connection with the first network device and the second network device. Therefore, when receiving a handover instruction from the first network device, the UE can still perform data transmission with the first network device or the second network device. Thus data interruption caused by handover is avoided, and duration of data interruption is shortened.

These or other aspects of the disclosure would be more clear and easier to understand from the description of embodiments below.

### BRIEF DESCRIPTION OF THE DRAWINGS

In order to describe embodiments of the disclosure or the technical solutions in the background more clearly, description is made below to accompanying drawings needed in the embodiments of the disclosure or the background.
FIG. 1A illustrates a schematic diagram of an architecture of a wireless communication system provided according to embodiments of the disclosure.
FIG. 1B illustrates a schematic diagram of an existing handover procedure in LTE provided according to embodiments of the disclosure.
FIG. 2 illustrates a schematic structural diagram of a user equipment (UE) provided according to embodiments of the disclosure.
FIG. 3 illustrates a schematic structural diagram of a network device provided according to embodiments of the disclosure.
FIG. 4 illustrates a schematic flow chart of a method for data transmission provided according to embodiments of the disclosure.
FIG. 5 illustrates a schematic flow chart of a method for handover provided according to embodiments of the disclosure.
FIG. 6 illustrates a schematic flow chart of another method for handover provided according to embodiments of the disclosure.
FIG. 7 illustrates a schematic diagram of a handover procedure provided according to embodiments of the disclosure.
FIG. 8 illustrates a schematic structural diagram of a computer device provided according to embodiments of the disclosure.
FIG. 9 illustrates a schematic structural diagram of another computer device provided according to embodiments of the disclosure.

### DETAILED DESCRIPTION

Terms in the detailed description are used for explaining particular embodiments of the disclosure only, and are not intended to limit the disclosure.

Terms such as "first", "second", "third" and "fourth" in the specification, claims and accompanying drawings are used for distinguishing different objects, but not for describing a specific order. Furthermore, terms "comprise" and "have", and any variant thereof are intended to be non-exclusive.

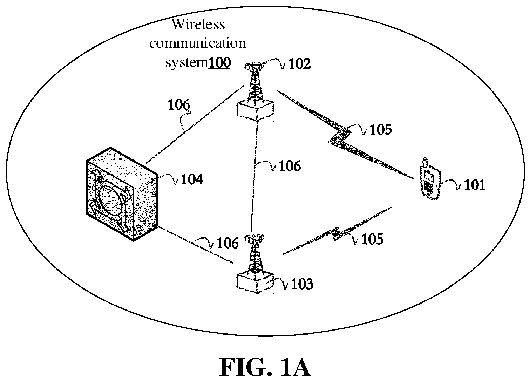

FIG. 1A illustrates a wireless communication system according to the disclosure. The wireless communication system is not limited to an LTE system, and may also be a 5th Generation mobile communication (5G) system, a new radio (NR) system, a machine to machine (M2M) system, etc. evolved in the future. As illustrated in FIG. 1A, the wireless communication system 100 may include a user equipment (UE) 101, a first network device 102, a second network device 103 and a core network 104.

The first network device 102 and the second network device 103 may be base stations. The base stations may communicate with the UE 101, and may also communicate with the core network 104. Each of the base stations may be a base transceiver station (BTS) in a time division synchronous code division multiple access (TD-SCDMA) system, or may be an evolutional NodeB (eNB) in an LTE system, or a base station in a 5G system or NR system. Moreover, the base station may also be an access point (AP), a transmitting receiving point (TRP), a central unit (CU) or other network entities, and may have some or all functions of the network entities above.

The UE 101 may be stationary or mobile in the wireless communication system 100. In some embodiments of the disclosure, the UE 101 may be a mobile device, a mobile station, a mobile unit, an M2M terminal, a wireless unit, a remote unit, a user agent, a mobile client, etc.

In particular, the network device may be configured to communicate with the UE 101 through a wireless interface under control of a network device controller (not illustrated). In some embodiments, the network device controller may be part of the core network, or may be integrated into the network device. Communication between the first network device 102 and the second network device 103, communication between the first network device 102 and the core network 104, and communication between the second network device 103 and the core network 104 may be realized through a backhaul interface 106 (such as an X2 interface) directly or indirectly.

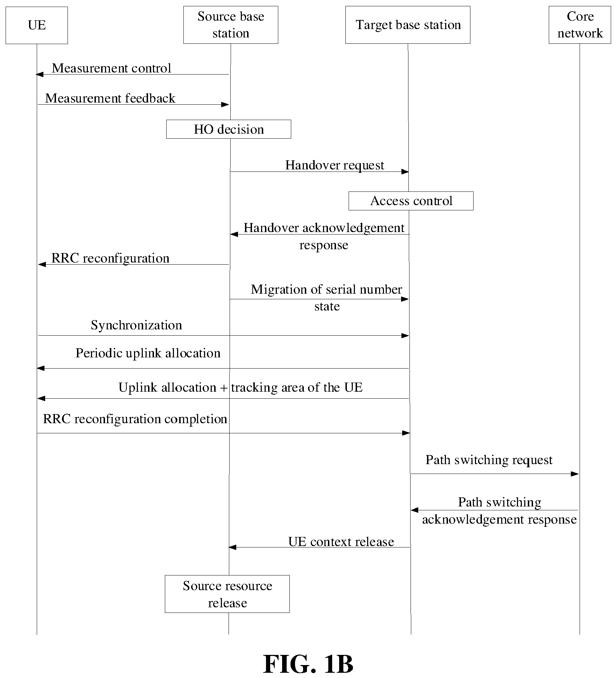

FIG. 1B illustrates an existing handover procedure in LTE. In the handover procedure illustrated in FIG. 1B. The handover preparation process starts from a handover request and ends with a handover acknowledgement response. The handover execution process starts from radio resource control (RRC) reconfiguration and ends with RRC reconfiguration completion. The handover completion process starts from a path switching request and ends with resource release. In the related art, in the handover execution process, an uplink and downlink between the UE and the network device are in an interrupted state, resulting in that the UE cannot send uplink data to the network device or receive downlink data issued by the network device. Thus, data interruption is caused between the UE and the network device.

In the disclosure, in the handover procedure, the first network device 102 may be a source base station, and the second network device 103 may be a target base station.

In the disclosure, a first network device 102 and a second network device 103 perform negotiation about configuration information of a time division multiplexing (TDM) pattern to be configured for a UE 101. The configuration information of the TDM pattern is used for the UE 101 to use the TDM pattern, and the TDM pattern is used for the UE 101 to keep connection with the first network device 102 and the second network device 103. Therefore, when receiving a handover instruction from the first network device 102, the UE 101 can still perform data transmission with the first network device 102 or the second network device 103. Thus, data interruption caused by handover is avoided, and duration of data interruption is shortened.

It is to be noted that, the wireless communication system 100 illustrated in FIG. 1A is merely for describing the technical solutions of the disclosure more clearly, and do not constitute limitation to the disclosure. Those of ordinary skill in the art should know that, with evolution of network architectures and emerging of new service scenarios, the technical solutions provided in the disclosure will also be applicable for similar technical problems.

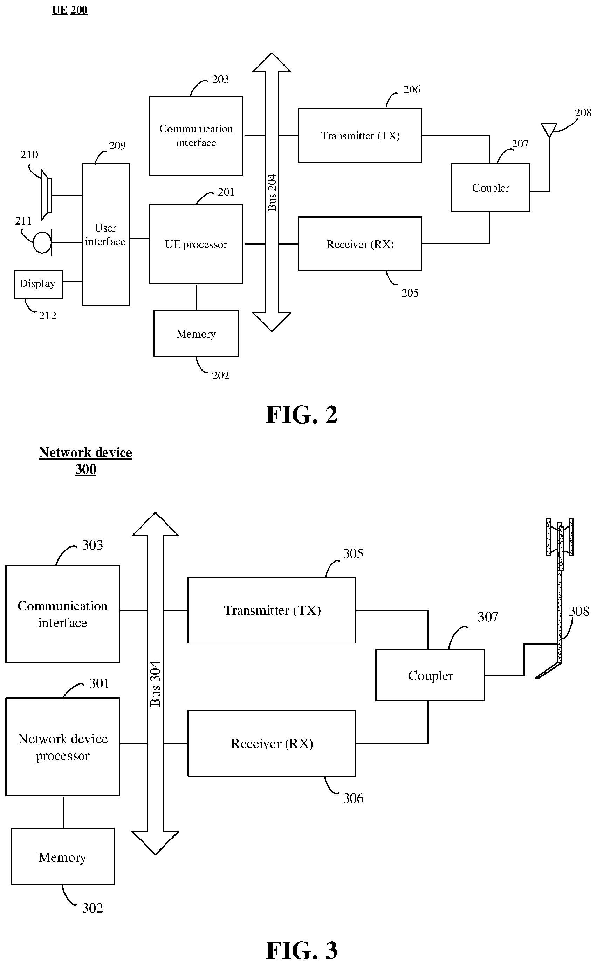

FIG. 2 illustrates a user equipment (UE) 200 provided according to some embodiments of the disclosure. As illustrated in FIG. 2, the UE 200 may include: one or more UE processors 201, a memory 202, a communication interface 203, a receiver 205, a transceiver 206, a coupler 207, an antenna 208, a user interface 202, and an input/output module (including an audio input/output module 210, a key input/output module 211, a display, etc.). These components may be connected through a bus 204 or otherwise. An example is given in FIG. 2 with these components connected through a bus.

The communication interface 203 may be used for the UE 200 to communicate with another communication device, such as a network device. In particular, the network device may be a network device 300 as illustrated in FIG. 3. In particular, the communication interface 203 may be an LTE (4G) communication interface, or may be a 5G or NR communication interface. Besides a wireless communication interface, the UE 200 may be further configured with a wired communication interface 203, for example, a local area network (LAN) interface.

The transmitter 206 may be configured to perform transmission processing, for example signal modulation, on a signal output by the UE processor 201. The receiver 205 may be configured to perform receiving processing, for example signal demodulation, on a mobile communication signal received by the antenna 208. In some embodiments of the disclosure, the transceiver 206 and the receiver 205 may be considered as a wireless modem. There may be one or more transmitters 206 and one or more receivers 205 in the UE 200. The antenna 208 may be configured to convert electromagnetic energy in a transmission line into electromagnetic waves in a free space, or convert electromagnetic waves in a free space into electromagnetic energy in a transmission line. The coupler 207 is configured to divide a mobile communication signal received by the antenna 208 into multiple paths so as to be allocated to multiple receivers 205.

Besides the transmitter 206 and the receiver 205 as illustrated in FIG. 2, the UE 200 may further include other communication components, such as a global positioning system (GPS) module, a Bluetooth module, a wireless fidelity (WiFi) module, etc. Besides the wireless communication signals described above, the UE 200 may also support other wireless communication signals, such as satellite signals and shortwave signals. Besides wireless communication, the UE 200 may be further configured with a wired network interface (such as a LAN interface) for supporting wired communication.

The input/output module may be configured to realize interaction between the UE and a user/external environment, and may mainly include an audio input/output module 210, a key input/output module 211, a display 212, etc. In particular, the input/output module further includes a camera, a touch screen, a sensor, etc. The input/output module communicates with the UE processor 201 through the user interface 209.

The memory 202 is coupled with the UE processor 201, and is configured to store various software programs and/or multiple sets of instructions. In particular, the memory 202 may include a high-speed random access memory, and may also include a non-volatile memory, for example one or more disk storage devices, flash memories or other non-volatile solid state storages. The memory 202 may store an operating system (referred to as a system for short hereinafter), such as an embedded operating system, for example ANDROID, IOS, and WINDOWS. The memory 202 may also store a network communication program. The network communication program may communicate with one or more attached devices, one or more UEs, and one or more network devices. The memory 202 may also store a user interface program. The user interface program may display content of an application via a graphical operation interface vividly, and receive a control operation of a user on an application through a menu, a dialog box, a key, etc.

In some embodiments of the disclosure, the memory 202 may be configured to store a program for realizing, at the UE 200 side, the method for data transmission and the method for handover provided in one or more embodiments of the disclosure. The implementation of the method for data transmission and the method for handover provided in one or more embodiments of the disclosure are described in the method embodiments below.

In some embodiments of the disclosure, the UE processor 201 may be configured to read and execute computer-readable instructions. In particular, the UE processor 201 may be configured to invoke a program stored in the memory 212, for example, a program for realizing, at the UE 200 side, the method for data transmission and the method for handover provided in one or more embodiments of the disclosure, and execute instructions contained in the program.

It is to be noted that the UE 200 illustrated in FIG. 2 is merely an implementation of the embodiments of the disclosure. In practical application, the UE 200 may also include more or less components, which will not be limited here.

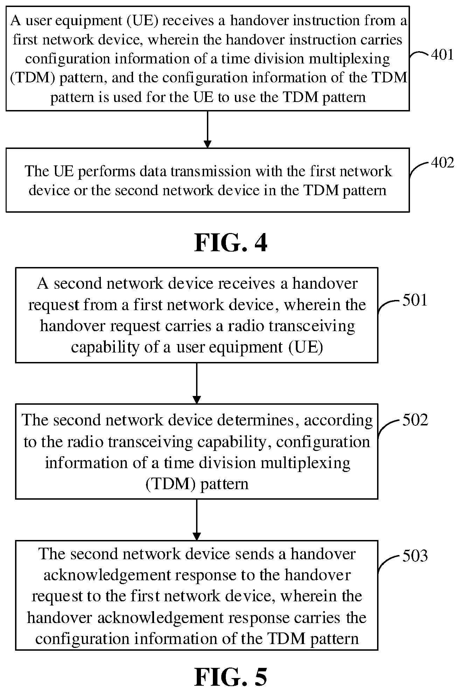

FIG. 3 illustrates a network device 300 provided according to some embodiments of the disclosure. As illustrated in FIG. 3, the network device 300 may include one or more network device processors 301, a memory 302, a communication interface 303, a transmitter 305, a receiver 306, a coupler 307 and an antenna 308. These components may be connected through a bus 304 or otherwise. An example is given in FIG. 4 with these components connected through a bus.

The communication interface 303 may be used for the network device 300 to communicate with another communication device, such as a UE or other network devices. In particular, the UE may be a UE 200 as illustrated in FIG. 2. In particular, the communication interface 303 may be an LTE (4G) communication interface, or may be a 5G or NR communication interface. Besides wireless communication interfaces, the network device 300 may be further configured with a wired communication interface 300 for supporting wired communication. For example, a backhaul link between a network device 300 and another network device 300 may be a wired communication connection.

The transmitter 305 may be configured to perform transmission processing, for example signal modulation, on a signal output by the network device processor 301. The receiver 306 may be configured to perform receiving processing, for example signal demodulation, on a mobile communication signal received by the antenna 308. In some embodiments of the disclosure, the transceiver 305 and the receiver 306 may be considered as a wireless modem. There may be one or more transmitters 305 and one or more receivers 306 in the network device 300. The antenna 308 may be configured to convert electromagnetic energy in a transmission line into electromagnetic waves in a free space, or convert electromagnetic waves in a free space into electromagnetic energy in a transmission line. The coupler 307 may be configured to divide a mobile communication signal into multiple paths so as to be allocated to multiple receivers 306.

The memory 302 is coupled with the network device processor 301, and is configured to store various software programs and/or multiple sets of instructions. In particular, the memory 302 may include a high-speed random access memory, and may also include a non-volatile memory, for example one or more disk storage devices, flash memories or other non-volatile solid state storages. The memory 302 may store an operating system, such as an embedded operating system, for example uCOS, VxWorks and RTLinuxS. The memory 402 may also store a network communication program. The network communication program may communicate with one or more attached devices, one or more terminal devices, or one or more network devices.

The network device processor 301 may be used for management of a wireless channel, implementation of a call, and establishing and removing a communication link, and may be used for providing cell handover control for a user in a current control area, or the like. In particular, the network device processor 301 may include: an administration module/communication module (AM/CM) (which is a center for voice path switching and information exchange), a basic module (BM) (for completing functions such as call processing, signalling processing, wireless resource management, wireless link management and circuit maintenance), a transcoder and submultiplexer (TCSM) (for completing functions of multiplexing/demultiplexing, and transcoding), etc.

In embodiments of the disclosure, the memory 302 may be configured to store a program for realizing, at the network device 300 side, the method for data transmission and the method for handover provided in one or more embodiments of the disclosure. The implementation of the method for data transmission and the method for handover provided in one or more embodiments of the disclosure are described in the method embodiments below.

In embodiments of the disclosure, the network device processor 301 may be configured to read and execute computer-readable instructions. In particular, the network device processor 301 may be configured to invoke a program stored in the memory 302, for example, a program for realizing, at the network device 300 side, the method for data transmission and the method for handover provided in one or more embodiments of the disclosure, and execute instructions contained in the program.

It is to be noted that the network device 300 illustrated in FIG. 3 is merely an implementation of the embodiments of the disclosure. In practical application, the network device300 may include more or less components, which will not be limited here.

Based on the embodiments of the wireless communication system 100, the UE 200 and the network device 300, corresponding methods for data transmission and methods for handover are provided in embodiments of the disclosure.

FIG. 4 illustrates a schematic flow chart of a method for data transmission provided according to embodiments of the disclosure. The method for data transmission includes actions 401 and 402.

In action 401, a user equipment (UE) receives a handover instruction from a first network device. The handover instruction carries configuration information of a time division multiplexing (TDM) pattern negotiated between the first network device and a second network device, and the configuration information of the TDM pattern is used for the UE to use the TDM pattern.

In the handover procedure, the first network device may be a source base station, and the second network device may be a target base station.

In the handover procedure, the handover instruction may be a radio resource control (RRC) reconfiguration instruction sent to the UE by the first network device.

In the handover procedure, the TDM pattern is used for the UE to keep connection with the first network device and the second network device. In the TDM pattern, the UE can perform data transmission with different network devices (i.e., the first network device or the second network device) in different time slots, so that the UE can keep connection with the first network device and the second network device. If not using the TDM pattern, the UE can only be configured to connect with the first network device or the second network device.

The configuration information of the TDM pattern may be denoted by at least one bit. For example, if the UE supports only one TDM pattern, the configuration information of the TDM pattern may be denoted with one bit. For example, "1" denotes that the UE uses the TDM pattern, and "0" denotes that the UE does not use the TDM pattern. For another example, if the UE supports four TDM patterns, the configuration information of the TDM may be denoted with 2 bits. For example, the four TDM pattern include TDM pattern 1, TDM pattern 2, TDM pattern 3 and TDM pattern 4. "00" denotes that the UE uses the TDM pattern 1, "01" denotes that the UE uses the TDM pattern 2, "10" denotes that the UE uses the TDM pattern 3, and "11" denotes that the UE uses the TDM pattern 4.

In action 402, the UE performs data transmission with the first network device or the second network device in the TDM pattern.

In particular implementation, after receiving the handover instruction, the UE uses the TDM pattern based on the configuration information of the TDM pattern. That is, the UE enters a dual-receiving and single-transmitting pattern. For the UE configured with the TDM pattern, both uplinks to the first network device and the second network device are available during handover.

In the disclosure, a first network device and a second network device negotiate configuration information of a TDM pattern to be configured for a UE. The configuration information of the TDM pattern is used for the UE to use the TDM pattern, and the TDM pattern is used for the UE to keep connection with the first network device and the second network device. Therefore, when receiving a handover instruction from the first network device, the UE can still perform data transmission with the first network device or the second network device. Thus, data interruption caused by handover is avoided, and duration of data interruption is shortened.

In an embodiment of the disclosure, the action that the UE performs data transmission with the first network device or the second network device in the TDM pattern may be specifically implemented in the following way.

In response to failing to detect an uplink grant configured in a physical downlink control channel (PDCCH), or in response to no preconfigured uplink grant being provided in the handover instruction, the UE performs data transmission with the first network device in the TDM pattern.

In particular implementation, if the UE fails to detect an uplink grant configured in the PDCCH, or no preconfigured uplink grant is provided in the handover instruction sent to the UE from the first network device, it indicates that the UE does not have an uplink grant for the link to the second network device. In such a situation, the UE cannot perform data transmission with the second network device, and the UE can only perform data transmission with the first network device.

In an embodiment of the disclosure, the action that the UE performs data transmission with the first network device or the second network device in the TDM pattern may be specifically implemented in the following way.

In response to detecting an uplink grant configured in the PDCCH, or in response to a preconfigured uplink grant being provided in the handover instruction, the UE determines, according to link attribute information, to perform data transmission with a target network device in the TDM pattern. The target network device includes the first network device or the second network device.

In particular implementation, if the UE has detected an uplink grant configured in the PDCCH, or a preconfigured uplink grant is provided in the handover instruction sent to the UE from the first network device, it indicates that the UE has an uplink grant for the link to the second network device. In such a situation, the UE can perform data transmission with both the second network device and the first network device. Therefore, in such a situation, the UE can determine to perform data transmission with the first network device or the second network device according to link attribute information of the two links.

Further, the link attribute information includes link quality. The action that the UE determines, according to the link attribute information, to perform data transmission with the target network device in the TDM pattern, the target network device including the first network device or the second network device, may be specifically implemented in the following way. In response to link quality of a link to the first network device being higher than link quality of a link to the second network device, the UE determines to perform data transmission with the first network device in the TDM pattern. In response to the link quality of the link to the second network device being higher than the link quality of the link to the first network device, the UE determines to perform data transmission with the second network device in the TDM pattern.

It can be seen that in the case where the UE can perform data transmission with both the first network device and the second network device, the UE may choose to perform data transmission in a link with better network quality. The timeliness of data transmission is improved.

FIG. 5 illustrates a schematic flow chart of a method for handover provided according to embodiments of the disclosure. The method for handover includes actions 501, 502 and 503.

In action 501, a second network device receives a handover request from a first network device. The handover request carries a radio transceiving capability of a user equipment (UE).

In the handover procedure, the first network device may be a source base station, and the second network device may be a target base station.

The radio transceiving capability of the UE is the dual-receiving and single-transmitting capability of the UE.

The aim that the first network device sends the radio transceiving capability of the UE to the second network device is to inform the second network device that the UE supports the TDM pattern, or to inform the second network device of TDM pattern(s) supported by the UE, or the like.

In action 502, the second network device determines, according to the radio transceiving capability, configuration information of a time division multiplexing (TDM) pattern.

In particular implementation, the second network device determines, according to the radio transceiving capability, whether the UE supports a TDM pattern. If yes, the second network device determines, according to the radio transceiving capability, which TDM pattern(s) is supported. If the UE supports only one TDM pattern, the second network device determines, based on the TDM pattern, configuration information of the TDM pattern. If the UE supports multiple TDM patterns, the UE selects a TDM pattern at first, and then determines, based on the selected TDM pattern, configuration information of the TDM pattern.

The configuration information of the TDM pattern may be denoted by at least one bit. For example, if the UE supports only one TDM pattern, the configuration information of the TDM pattern may be denoted with one bit. For example, "1" denotes that the UE uses the TDM pattern, and "0" denotes that the UE does not use the TDM pattern. For another example, if the UE supports four TDM patterns, the configuration information of the TDM may be denoted with 2 bits. For example, the four TDM pattern include TDM pattern 1, TDM pattern 2, TDM pattern 3 and TDM pattern 4. "00" denotes that the UE uses the TDM pattern 1, "01" denotes that the UE uses the TDM pattern 2, "10" denotes that the UE uses the TDM pattern 3, and "11" denotes that the UE uses the TDM pattern 4.

In action 503, the second network device sends a handover acknowledgement response to the handover request to the first network device. The handover acknowledgement response carries the configuration information of the TDM pattern. The handover acknowledgement response is used for the first network device to send the configuration information of the TDM pattern to the UE. The configuration information of the TDM pattern is used for the UE to use the TDM pattern. The TDM pattern is used for the UE to keep connection with the first network device and the second network device.

In the handover procedure, the first network device may send the configuration information of the TDM pattern to the UE through an RRC reconfiguration instruction.

In the handover procedure, the TDM pattern is used for the UE to keep connection with the first network device and the second network device.

In the disclosure, a first network device and a second network device negotiate configuration information of a TDM pattern to be configured for a UE. The configuration information of the TDM pattern is used for the UE to use the TDM pattern, and the TDM pattern is used for the UE to keep connection with the first network device and the second network device. Therefore, when receiving a handover instruction from the first network device, the UE can still perform data transmission with the first network device or the second network device. Thus, data interruption caused by handover is avoided, and duration of data interruption is shortened.

In an embodiment of the disclosure, after action 503, the method further includes the action that the second network device prepares to receive uplink data from the UE.

It can be seen that for the UE configured with the TDM pattern, both uplinks to the first network device and the second network device are available in a handover procedure. Therefore, after action 503, the second network device is ready to receive uplink data from the UE, which improves the timeliness of data transmission.

In an embodiment of the disclosure, the method further includes: during handover, receiving, by the second network device, the uplink data from the UE; in response to the second network device not being connected with a core network, buffering, by the second network device, the uplink data; and in response to the second network device being connected with the core network, forwarding, by the second network device, the uplink data to the core network.

In particular implementation, during handover, the second network device may have not established a connection with a core network yet. Therefore, when receiving uplink data from the UE, the second network device firstly determines whether the second network device is connected with the core network. The action that the second network device determines whether the second network device is connected with the core network may be specifically implemented in the following way. The second network device determines whether the second network device has stored address information of a serving gateway (SGW). If yes, it indicates that the second network device is connected with the core network; and if not, it indicates that the second network device is not connected with the core network.

It can be seen that, in the embodiment, when the second network device is not connected with the core network, the second network device firstly buffers the received uplink data, so that it can be ensured that uplink data is not lost. When the second network device is connected with the core network, the second network device directly forwards the received uplink data to the core network, so that the timeliness of data transmission can be improved.

In an embodiment of the disclosure, after the second network device buffers the uplink data the method further includes the action that: in response to the second network device being connected with the core network, the second network device forwards the buffered uplink data to the core network.

It can be seen that, in response to the second network device being connected with the core network, the second network device forwards the buffered uplink data to the core network in a timely manner; in this way, the timeliness of data transmission can be improved.

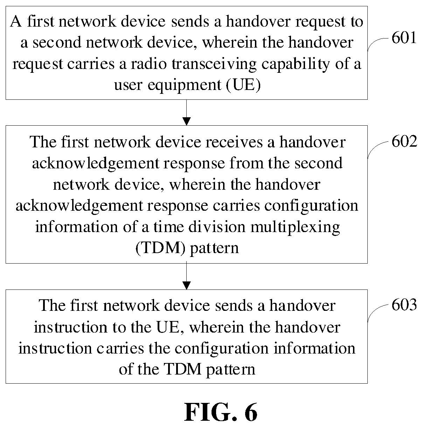

FIG. 6 illustrates a schematic flow chart of a method for handover provided according to embodiments of the disclosure. The method for handover includes actions 601, 602 and 603.

In action 601, a first network device sends a handover request to a second network device. The handover request carries a radio transceiving capability of a user equipment (UE).

In the handover procedure, the first network device may be a source base station, and the second network device may be a target base station.

The radio transceiving capability of the UE refers to the dual-receiving and single-transmitting capability of the UE.

The aim that the first network device sends the radio transceiving capability of the UE to the second network device is to inform the second network device that the UE supports the TDM pattern, or to inform the second network device of TDM pattern(s) supported by the UE, or the like.

In action 602, the first network device receives a handover acknowledgement response from the second network device. The handover acknowledgement response carries configuration information of a time division multiplexing (TDM) pattern determined by the second network device according to the radio transceiving capability.

In action 603, the first network device sends a handover instruction to the UE. The handover instruction carries the configuration information of the TDM pattern. The configuration information of the TDM pattern is used for the UE to use the TDM pattern. The TDM pattern is used for the UE to keep connection with the first network device and the second network device.

In the handover procedure, the handover instruction may be an RRC reconfiguration instruction sent to the UE by the first network device.

In the handover procedure, the TDM pattern is used for the UE to keep connection with the first network device and the second network device.

The configuration information of the TDM pattern may be denoted by at least one bit. For example, if the UE supports only one TDM pattern, the configuration information of the TDM pattern may be denoted with one bit. For example, "1" denotes that the UE uses the TDM pattern, and "0" denotes that the UE does not use the TDM pattern. For another example, if the UE supports four TDM patterns, the configuration information of the TDM may be denoted with 2 bits. For example, the four TDM pattern include TDM pattern 1, TDM pattern 2, TDM pattern 3 and TDM pattern 4. "00" denotes that the UE uses the TDM pattern 1, "01" denotes that the UE uses the TDM pattern 2, "10" denotes that the UE uses the TDM pattern 3, and "11" denotes that the UE uses the TDM pattern 4.

In the disclosure, a first network device and a second network device negotiate configuration information of a TDM pattern to be configured for a UE. The configuration information of the TDM pattern is used for the UE to use the TDM pattern, and the TDM pattern is used for the UE to keep connection with the first network device and the second network device. Therefore, when receiving a handover instruction from the first network device, the UE can still perform data transmission with the first network device or the second network device. Thus, data interruption caused by handover is avoided, and duration of data interruption is shortened.

In an embodiment of the disclosure, after action 603, the method further includes the actions that the first network device receives uplink data from the UE during handover; and the first network device forwards the uplink data to a core network.

In particular implementation, in the related art, when receiving uplink data from the UE, the first network device needs to forward the uplink data to the second network device. In the embodiment, when receiving uplink data from the UE, the first network device directly forwards the uplink data to the core network, so that the timeliness of data transmission can be improved.

In an embodiment of the disclosure, after action 603, the method further includes the action that the first network device sends downlink data to the UE during handover.

In particular implementation, in the related art, a downlink from the first network device to the UE is disconnected during handover, causing data interruption of the downlink between the UE and the network device. In the embodiment, the downlink from the first network device to the UE is connected during handover. The problem of downlink data interruption is avoided.

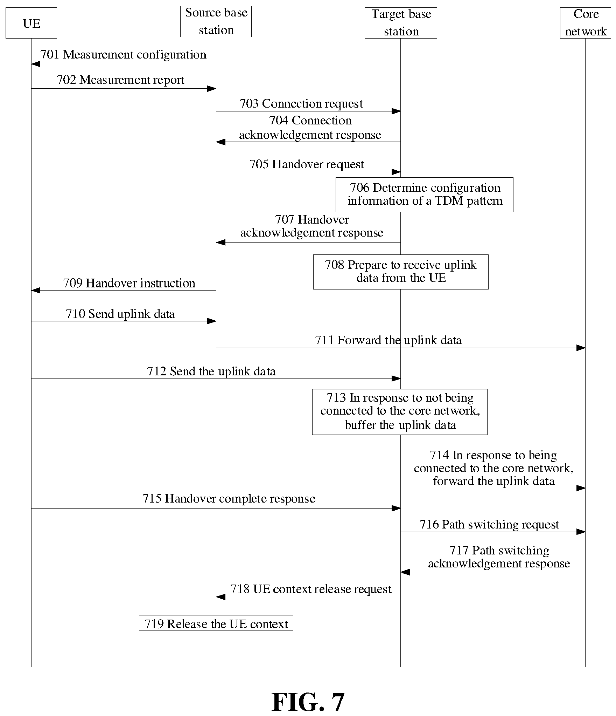

In combination with FIG. 4, FIG. 5 and FIG. 6, a schematic diagram of a handover procedure is provided according to embodiments of the disclosure. As illustrated in FIG. 7, the handover procedure includes the following actions.

In action 701, a first network device sends a measurement configuration to a user equipment (UE), and the UE receives the measurement configuration from the first network device.

In action 702, the UE sends a measurement report to the first network device, and the first network device receives the measurement report from the UE.

In action 703, the first network device sends a connection request to the second network device, and the second network device receives the connection request from the first network device.

In action 704, the second network device sends a connection acknowledgement response to the connection request to the first network device, and the first network device receives the connection acknowledgement response from the second network device.

In action 705, the first network device sends a handover request to the second network device, and the second network device receives the handover request from the first network device. The handover request carries a radio transceiving capability the UE.

In action 706, the second network device determines, according to the radio transceiving capability of the UE, configuration information of a time division multiplexing (TDM) pattern.

In action 707, the second network device sends a handover acknowledgement response to the handover request to the first network device, and the first network device receives the handover acknowledgement response from the second network device. The handover acknowledgement response carries the configuration information of the TDM pattern.

In action 708, the second network device prepares to receive uplink data from the UE.

In action 709, the first network device sends a handover instruction to the UE, and the UE receives the handover instruction from the first network device. The handover instruction carries the configuration information of the TDM pattern. The configuration information of the TDM pattern is used for the UE to use the TDM pattern. The TDM pattern is used for the UE to keep connection with the first network device and the second network device.

In action 710, the UE sends uplink data to the first network device and the first network device receives the uplink data from the UE, in one of the following cases:
the UE has failed to detect an uplink grant configured in a physical downlink control channel (PDCCH) or no preconfigured uplink grant is provided in the handover instruction; or
the UE detects an uplink grant configured in the PDCCH or a preconfigured uplink grant is provided in the handover instruction, and link quality of a link to the first network device is higher than link quality of a link to the second network device.

In action 711, the first network device sends the uplink data to a core network, and the core network receives the uplink data from the first network device.

In action 712, the UE sends uplink data to the second network device, and the second network device receives the uplink data from the UE, in the following case: the UE detects an uplink grant configured in the PDCCH or a preconfigured uplink grant is provided in the handover instruction, and the link quality of the link to the first network device is higher than the link quality of the link to the second network device.

In action 713, in response to the second network device not being connected with a core network, the second network device buffers the uplink data.

After action 713, if the second network device is connected with the core network, the second network device forwards the buffered uplink data to the core network in a timely manner.

In action 714, in response to the second network device being connected with the core network, the second network device forwards the uplink data to the core network, and the core network receives the uplink data from the second network device.

In action 715, the UE sends a handover completion response to the handover instruction to the second network device, and the second network device receives the handover completion response from the UE.

In action 716, the second network device sends a path switching request to the core network, and the core network receives the path switching request from the second network device.

In action 717, the core network sends a path switching acknowledgement response to the path switching request to the second network device, and the second network device receives the path switching acknowledgement response from the core network.

In action 718, the second network device sends a request for releasing context of the UE to the first network device, and the first network device receives, from the second network device, the request for releasing the context of the UE.

In action 719, the first network device release the context of the UE.

It is to be noted that particular implementations of the content described in the embodiment may refer to the method above, which will not be described here.

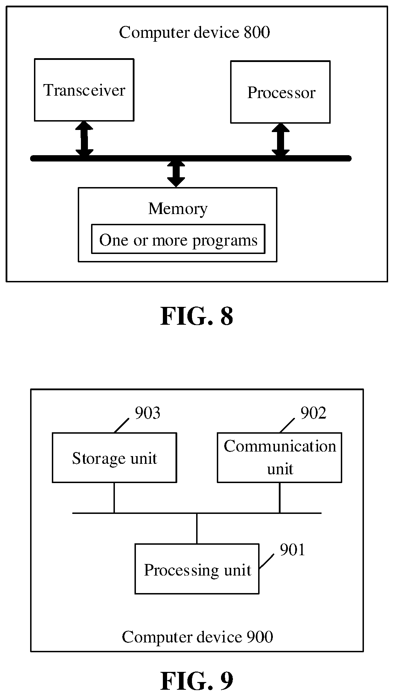

FIG. 8 illustrates a computer device 800 provided according to embodiments of the disclosure. The computer device 800 is applied to a communication system including a user equipment (UE), a first network device and a second network device. The computer device 800 may be the UE, or the first network device, or the second network device. The computer device 800 includes one or more processors, one or more memories, one or more transceivers, and one or more programs.

The one or more programs are stored in the one or more memories, and are configured to be executed by the one or more processors.

In an embodiment, when the computer device 800 is the UE, the program includes instructions for executing the following actions. A handover instruction is received from a first network device. The handover instruction carries configuration information of a time division multiplexing (TDM) pattern negotiated between the first network device and a second network device, and the configuration information of the TDM pattern is used for the UE to use the TDM pattern. Data transmission is performed with the first network device or the second network device in the TDM pattern.

Further, with respect to the action of performing data transmission with the first network device or the second network device in the TDM pattern, the program includes instructions for executing the action of: in response to failing to detect an uplink grant configured in a physical downlink control channel (PDCCH), or in response to no preconfigured uplink grant being provided in the handover instruction, performing data transmission with the first network device in the TDM pattern.

Further, with respect to the action of performing data transmission with the first network device or the second network device in the TDM pattern, the program includes instructions for executing the action of: in response to detecting an uplink grant configured in the PDCCH, or in response to a preconfigured uplink grant being provided in the handover instruction, determining, according to link attribute information, to perform data transmission with a target network device in the TDM pattern. The target network device includes the first network device or the second network device.

Further, with respect to the action of determining, according to the link attribute information, to perform data transmission with the target network device in the TDM pattern, the target network device including the first network device or the second network device, the program includes instructions for executing the action of: in response to link quality of a link to the first network device being higher than link quality of a link to the second network device, determining to perform data transmission with the first network device in the TDM pattern; or in response to the link quality of the link to the second network device being higher than the link quality of the link to the first network device, determining to perform data transmission with the second network device in the TDM pattern.

In an embodiment, when the computer device 800 is the second network device, the program includes instructions for executing the following actions: receiving a handover request is from the first network device, with the handover request carrying a radio transceiving capability of the UE; determining configuration information of a time division multiplexing (TDM) pattern according to the radio transceiving capability; and sending a handover acknowledgement response to the handover request to the first network device. The handover acknowledgement response carries the configuration information of the TDM pattern. The handover acknowledgement response is used for the first network device to send the configuration information of the TDM pattern to the UE. The configuration information of the TDM pattern is used for the UE to use the TDM pattern. The TDM pattern is used for the UE to keep connection with the first network device and the second network device.

Further, after the action of sending the handover acknowledgement response to the handover request to the first network device, the program further includes instructions for executing the following action: preparing to receive uplink data from the UE.

Further, the program further includes instructions for executing the following actions: receiving uplink data from the UE during handover; in response to the second network device not being connected with a core network, buffering the uplink data; and in response to the second network device being connected with the core network, forwarding the uplink data to the core network.

Further, after the action of buffering the uplink data, the program further includes instructions for executing the following action: in response to the second network device being connected with the core network, forwarding the buffered uplink data to the core network.

In an embodiment, when the computer device 800 is the first network device, the program includes instructions for executing the following actions: sending a handover request to a second network device, with the handover request carrying a radio transceiving capability of a user equipment (UE); receiving a handover acknowledgement response from the second network device, with the handover acknowledgement response carrying configuration information of a time division multiplexing (TDM) pattern determined by the second network device according to the radio transceiving capability; and sending handover instruction to the UE. The handover instruction carries the configuration information of the TDM pattern. The configuration information of the TDM pattern is used for the UE to use the TDM pattern. The TDM pattern is used for the UE to keep connection with the first network device and the second network device.

Further, after the action of sending the handover instruction to the UE, the program further includes instructions for executing the following actions: receiving uplink data from the UEduring handover; and forwarding the uplink data to a core network.

Further, after the action of sending the handover instruction to the UE, the program further includes instructions for executing the following action: sending downlink data to the UE during handover.

It is to be noted that particular implementations of the content described in the embodiment may refer to the method above, which will not be described here.

FIG. 9 illustrates a computer device 900 provided according to embodiments of the disclosure. The computer device 900 is applied to a communication system including a user equipment (UE), a first network device and a second network device. The computer device 900 may be the UE, or the first network device, or the second network device. The computer device 900 includes a processing unit 901, a communication unit 902 and a storage unit 903.

In an embodiment, the computer device 900 is the UE.

The processing unit 901 is configured to receive, through the communication unit 902, a handover instruction from a first network device. The handover instruction carries configuration information of a time division multiplexing (TDM) pattern negotiated between the first network device and a second network device, and the configuration information of the TDM pattern is used for the UE to use the TDM pattern.

The processing unit 901 is further configured to perform data transmission with the first network device or the second network device in the TDM pattern.

Further, with respect to the action of performing data transmission with the first network device or the second network device in the TDM pattern, the processing unit 901 is specifically configured to: in response to failing to detect an uplink grant configured in a physical downlink control channel (PDCCH), or in response to no preconfigured uplink grant being provided in the handover instruction, perform data transmission with the first network device in the TDM pattern.

Further, with respect to the action of performing data transmission with the first network device or the second network device in the TDM pattern, the processing unit 901 is specifically configured to: in response to detecting an uplink grant configured in the PDCCH, or in response to a preconfigured uplink grant being provided in the handover instruction, determine, according to link attribute information, to perform data transmission with a target network device in the TDM pattern. The target network device includes the first network device or the second network device.

Further, with respect to the action of determining, according to the link attribute information, to perform data transmission with the target network device in the TDM pattern, with the target network device including the first network device or the second network device, the processing unit 901 is specifically configured to: in response to link quality of a link to the first network device being higher than link quality of a link to the second network device, determine to perform data transmission with the first network device in the TDM pattern; or in response to the link quality of the link to the second network device being higher than the link quality of the link to the first network device, determine to perform data transmission with the second network device in the TDM pattern.

In an embodiment, the computer device 900 is the second network device.

The processing unit 901 is configured to receive, through the communication unit 902, a handover request from the first network device. The handover request carries a radio transceiving capability of the UE.

The processing unit 901 is further configured to determine, according to the radio transceiving capability, configuration information of a time division multiplexing (TDM) pattern.

The processing unit 901 is further configured to send, through the communication unit 902, a handover acknowledgement response to the handover request to the first network device. The handover acknowledgement response carries the configuration information of the TDM pattern. The handover acknowledgement response is used for the first network device to send the configuration information of the TDM pattern to the UE. The configuration information of the TDM pattern is used for the UE to use the TDM pattern. The TDM pattern is used for the UE to keep connection with the first network device and the second network device.

Further, after the action of sending the handover acknowledgement response to the handover request to the first network device, the processing unit 901 is further configured to receive uplink data from the UE.

Further, the processing unit 901 is further configured to: receive uplink data from the UE through the communication unit 902 during handover.

The processing unit 901 is further configured to buffer the uplink data in response to the second network device not being connected with a core network.

The processing unit 901 is further configured to forward the uplink data to the core network through the communication unit 902 in response to the second network device being connected with the core network.

Further, after the action of buffering the uplink data, the processing unit 901 is further configured to forward the buffered uplink data to the core network through the communication unit 902 in response to the second network device being connected with the core network.

In an embodiment, the computer device 900 is the first network device.

The processing unit 901 is configured to send, through the communication unit 902, a handover request to the second network device. The handover request carries a radio transceiving capability of the UE.

The processing unit 901 is further configured to receive, through the communication unit 902, a handover acknowledgement response from the second network device. The handover acknowledgement response carries configuration information of a time division multiplexing (TDM) pattern determined by the second network device according to the radio transceiving capability.

The processing unit 901 is further configured to send, through the communication unit 902, a handover instruction to the UE. The handover instruction carries the configuration information of the TDM pattern. The configuration information of the TDM pattern is used for the UE to use the TDM pattern. The TDM pattern is used for the UE to keep connection with the first network device and the second network device.

Further, after the action of sending the handover instruction to the UE, the processing unit 901 is further configured to receive, through the communication unit 902, uplink data from the UE during handover, and the processing unit 901 is further configured to forward the uplink data to the core network through the communication unit 902.

Further, after the action of sending the handover instruction to the UE, the processing unit 901 is further configured to send downlink data to the UE during handover.

The processing unit 901 may be a processor or a controller (for example, may be a central processing unit (CPU), a general-purpose processor, or a digital signal processor (DSP)), an application-specific integrated circuit (ASIC), a field programmable gate array (FPGA), or other programmable logic devices, transistor logic devices, hardware components, or any combination thereof. The processing unit may implement or execute various exemplary logic blocks, modules and circuits described in conjunction with the disclosure. The processor may also be a combination realizing a computation function, for example a combination of one or more microprocessors, and a combination of a DSP and a microprocessor. The communication unit 902 may be a transceiver, a transceiving circuit, a radio-frequency chip, a communication interface, etc. The storage unit 903 may be a memory.

The computer device involved in the embodiments of the disclosure may be the computer device as illustrated in FIG. 8, when the processing unit 901 is a processor, the communication unit 902 is a communication interface, and the storage unit 903 is a memory.

In embodiments of the disclosure, a computer-readable storage medium for storing a computer program for electronic data exchange is also provided. The computer program enables a computer to perform some or all actions performed by the UE, the first network device or the second network device in the method embodiments above.

In embodiments of the disclosure, a computer program product including a non-transitory computer-readable storage medium stored with a computer program is also provided. The computer program is operable to enable a computer to perform some or all actions performed by the UE, the first network device or the second network device in the method embodiments above. The computer program product may be a software package.

The actions in the method or algorithm described in embodiments of the disclosure may be implemented with hardware, or by a processor executing software instructions. The software instructions may be composed by corresponding software modules. The software modules may be stored in a random access memory (RAM), a flash, a read-only memory (ROM), an erasable programmable read-only memory (EPROM), an electrically erasable programmable read-only memory (EEPROM), a register, a hard disk, a mobile hard disk drive, a compact disc read-only memory (CD-ROM) or a storage medium in another other form familiar to those skilled in the art. An exemplary storage medium is coupled to the processor, so that the processor can read information from the storage medium and can write information to the storage medium. Of course, the storage medium may also be a constitute component of the processor. The processor and the storage medium may be in an ASIC. Furthermore, the ASIC may be in an access network device, a target network device or a core network device. Of course, the processor and the storage medium may also be resident in the access network device, the target network device or the core network device as discrete components.

Those skilled in the art should realize that, in one or more of the examples above, some or all of the functions described in the embodiments of the disclosure may be realized with software, hardware, firmware or any combination thereof. When implemented with software, all or some of the functions may be embodied in the form of a computer program product. The computer program product includes one or more computer instructions. The computer program instructions, when loaded and executed on a computer, realize some or all of the flows or functions described in the embodiments of the disclosure. The computer may be a general-purpose computer, a specific-purpose computer, a computer network, or other programmable devices. The computer instructions may be stored in a computer-readable storage medium, or may be transferred from one computer readable storage medium to another computer readable storage medium. For example, the computer instructions may be transferred from a website, computer, server or data center to another website, computer, server or data center in a wired (e.g., coaxial cables, fibers, digital subscriber lines (DSLs)) or wireless (e.g., infrared, radio or microwave) manner. The computer-readable storage medium may be any available medium accessible by a computer, or may be a data storage device containing one or more available mediums integrated into a server, a data center, etc. The available medium may be a magnetic medium (for example, a floppy disk, a hard disk, a tape), an optical medium (for example, a digital video disc (DVD)), a semi-conductor medium (for example, a solid state drive (SSD)), etc.

The particular embodiments described above are further detailed description of the purpose, technical solutions and beneficial effects of the embodiments of the disclosure. It is to be understood that the above are merely particular implementations of embodiments of the disclosure, and are not intended to limit the scope of protection of the disclosure. Any modification, equivalent replacement, improvement and so on made based on the technical solutions of the embodiments of the disclosure should fall within the scope of protection of the embodiments of the disclosure.

## Claims

1. A method for data transmission, comprising:
receiving, by a user equipment (UE), a handover instruction from a first network device, wherein the handover instruction carries configuration information of a time division multiplexing (TDM) pattern negotiated between the first network device and a second network device, and the configuration information of the TDM pattern is used for the UE to use the TDM pattern; and
performing, by the UE, data transmission with the first network device or the second network device in the TDM pattern.

2. The method according to claim 1, wherein performing, by the UE, data transmission with the first network device or the second network device in the TDM pattern comprises:
in response to failing to detect an uplink grant configured in a physical downlink control channel (PDCCH), or in response to no preconfigured uplink grant being provided in the handover instruction, performing, by the UE, data transmission with the first network device in the TDM pattern.

3. The method according to claim 1 or 2, wherein performing, by the UE, data transmission with the first network device or the second network device in the TDM pattern comprises:
in response to detecting an uplink grant configured in the PDCCH, or in response to a preconfigured uplink grant being provided in the handover instruction, determining, by the UE, according to link attribute information, to perform data transmission with a target network device in the TDM pattern, wherein the target network device comprises the first network device or the second network device.

4. The method according to claim 3, wherein the link attribute information comprises link quality, and determining, by the UE, according to the link attribute information, to perform data transmission with the target network device in the TDM pattern, wherein the target network device comprises the first network device or the second network device, comprises: in response to link quality of a link to the first network device being higher than link quality of a link to the second network device, determining, by the UE, to perform data transmission with the first network device in the TDM pattern; or
in response to the link quality of the link to the second network device being higher than the link quality of the link to the first network device, determining, by the UE, to perform data transmission with the second network device in the TDM pattern.

5. A method for handover, comprising:
receiving, by a second network device, a handover request from a first network device, wherein the handover request carries a radio transceiving capability of a user equipment (UE);
determining, by the second network device, according to the radio transceiving capability, configuration information of a time division multiplexing (TDM) pattern; and
sending, by the second network device, a handover acknowledgement response to the handover request to the first network device, wherein the handover acknowledgement response carries the configuration information of the TDM pattern, the handover acknowledgement response is used for the first network device to send the configuration information of the TDM pattern to the UE, the configuration information of the TDM pattern is used for the UE to use the TDM pattern, and the TDM pattern is used for the UE to keep connection with the first network device and the second network device.

6. The method according to claim 5, wherein after sending, by the second network device, the handover acknowledgement response to the handover request to the first network device, the method further comprises:
preparing, by the second network device, to receive uplink data from the UE.

7. The method according to claim 6, further comprising:
during handover, receiving, by the second network device, the uplink data from the UE;
in response to the second network device not being connected with a core network, buffering, by the second network device, the uplink data; and
in response to the second network device being connected with the core network, forwarding, by the second network device, the uplink data to the core network.

8. The method according to claim 7, wherein after buffering, by the second network device, the uplink data, the method further comprises:
in response to the second network device being connected with the core network, forwarding, by the second network device, the buffered uplink data to the core network.

9. A method for handover, comprising:
sending, by a first network device, a handover request to a second network device, wherein the handover request carries a radio transceiving capability of a user equipment (UE);
receiving, by the first network device, a handover acknowledgement response from the second network device, wherein the handover acknowledgement response carries configuration information of a time division multiplexing (TDM) pattern determined by the second network device according to the radio transceiving capability; and
sending, by the first network device, a handover instruction to the UE, wherein the handover instruction carries the configuration information of the TDM pattern, the configuration information of the TDM pattern is used for the UE to use the TDM pattern, and the TDM pattern is used for the UE to keep connection with the first network device and the second network device.

10. The method according to claim 9, wherein after sending, by the first network device, the handover instruction to the UE, the method further comprises:
during handover, receiving, by the first network device, uplink data from the UE; and
forwarding, by the first network device, the uplink data to a core network.

11. The method according to claim 9 or 10, wherein after sending, by the first network device, the handover instruction to the UE, the method further comprises:
during handover, sending, by the first network device, downlink data to the UE.

12. A user equipment (UE), comprising a communication unit and a processing unit, wherein
the processing unit is configured to receive, through the communication unit, a handover instruction from a first network device, wherein the handover instruction carries configuration information of a time division multiplexing (TDM) pattern negotiated between the first network device and a second network device, and the configuration information of the TDM pattern is used for the UE to use the TDM pattern; and
the processing unit is further configured to perform data transmission with the first network device or the second network device in the TDM pattern.

13. A network device, applied to a communication system comprising a first network device, a second network device and a user equipment (UE), wherein the network device is the second network device and comprises a communication unit and a processing unit, and wherein:
the processing unit is configured to receive, through the communication unit, a handover request from the first network device, wherein the handover request carries a radio transceiving capability of the UE;
the processing unit is further configured to determine, according to the radio transceiving capability, configuration information of a time division multiplexing (TDM) pattern; and
the processing unit is further configured to send, through the communication unit, a handover acknowledgement response to the handover request to the first network device, wherein the handover acknowledgement response carries the configuration information of the TDM pattern, the handover acknowledgement response is used for the first network device to send the configuration information of the TDM pattern to the UE, the configuration information of the TDM pattern is used for the UE to use the TDM pattern, and the TDM pattern is used for the UE to keep connection with the first network device and the second network device.

14. A network device, applied to a communication system comprising a first network device, a second network device and a user equipment (UE), wherein the network device is the first network device and comprises a communication unit and a processing unit, and wherein:
the processing unit is configured to send, through the communication unit, a handover request to the second network device, wherein the handover request carries a radio transceiving capability of the UE;
the processing unit is further configured to receive, through the communication unit, a handover acknowledgement response from the second network device, wherein the handover acknowledgement response carries configuration information of a time division multiplexing (TDM) pattern determined by the second network device according to the radio transceiving capability; and
the processing unit is further configured to send, through the communication unit, a handover instruction to the UE, wherein the handover instruction carries the configuration information of the TDM pattern, the configuration information of the TDM pattern is used for the UE to use the TDM pattern, and the TDM pattern is used for the UE to keep connection with the first network device and the second network device.

15. A user equipment (UE), comprising one or more processors, one or more memories, one or more transceivers, and one or more programs, wherein the one or more programs are stored in the one or more memories and are configured to be executed by the one or more processors, and the one or more programs comprise instructions for performing actions of the method according to any one of claims 1 to 4.

16. A user equipment (UE), comprising one or more processors, one or more memories, one or more transceivers, and one or more programs, wherein the one or more programs are stored in the one or more memories and are configured to be executed by the one or more processors, and the one or more programs comprise instructions for performing actions of the method according to any one of claims 5 to 8.

17. A user equipment (UE), comprising one or more processors, one or more memories, one or more transceivers, and one or more programs, wherein the one or more programs are stored in the one or more memories and are configured to be executed by the one or more processors, and the one or more programs comprise instructions for performing actions of the method according to any one of claims 9 to 11.

18. A computer-readable storage medium for storing a computer program for electronic data exchange, wherein the computer program comprises instructions enabling a computer to perform actions of the method according to any one of claims 1 to 4.

19. A computer-readable storage medium for storing a computer program for electronic data exchange, wherein the computer program comprises instructions enabling a computer to perform actions of the method according to any one of claims 5 to 8.

20. A computer-readable storage medium for storing a computer program for electronic data exchange, wherein the computer program comprises instructions enabling a computer to perform actions of the method according to any one of claims 9 to 11.
